# EUROPEAN PATENT SPECIFICATION

(11) **EP 3 232 558 B1**
(45) Date of publication and mention of the grant of the patent: **02.09.2020**
(21) Application number: 15874813.7
(22) Date of filing: 01.07.2015
(51) Int. Cl.: H02M 7/483, H02M 7/487, H02M 7/493, H02M 1/00

(54) **MULTI-LEVEL-TOPOLOGY CIRCUIT AND POWER CONVERTER**
SCHALTUNG MIT MEHRSTUFIGER TOPOLOGIE UND LEISTUNGSWANDLER
CIRCUIT À TOPOLOGIE À PLUSIEURS NIVEAUX ET CONVERTISSEUR DE PUISSANCE

(30) Priority: 04.01.2015 CN 201510003885
(43) Date of publication of application: 18.10.2017
(73) Proprietor: Huawei Technologies Co. Ltd., Shenzhen, Guangdong 518129 (CN)
(72) Inventor: YE, Fei, Shenzhen Guangdong 518129 (CN); SHI, Lei, Shenzhen Guangdong 518129 (CN); FU, Dianbo, Shenzhen Guangdong 518129 (CN)
(74) Representative: Thun, Clemens
(86) International application number: PCT/CN2015/083023
(87) International publication number: WO 2016/107123

(56) References cited:
- EP-A1- 2 582 031
- WO-A2-03/005551
- CN-A- 102 594 181
- CN-A- 102 664 514
- CN-A- 103 475 248
- CN-A- 103 490 656
- CN-U- 201 937 493
- DE-B3-102013 220 864
- JP-A- 2002 247 862
- US-A- 5 572 418
- ALIAN CHEN ET AL: "A novel type of combined multilevel converter topologies", INDUSTRIAL ELECTRONICS SOCIETY, 2004. IECON 2004. 30TH ANNUAL CONFEREN CE OF IEEE BUSAN, SOUTH KOREA 2-6 NOV. 2004, PISCATAWAY, NJ, USA,IEEE, vol. 3, 2 November 2004 (2004-11-02), pages 2290-2294, XP010799316, DOI: 10.1109/IECON.2004.1432157 ISBN: 978-0-7803-8730-0
- SHIN HYUNJIN ET AL: "Power loss comparison with different PWM methods for 3L-NPC inverter and 3L-T type inverter", 2014 INTERNATIONAL POWER ELECTRONICS AND APPLICATION CONFERENCE AND EXPOSITION, IEEE, 5 November 2014 (2014-11-05), pages 1322-1327, XP032734639, DOI: 10.1109/PEAC.2014.7038054 [retrieved on 2015-02-09]
- BUSQUETS-MONGE S ET AL: "Voltage Balancing Control of Diode-Clamped Multilevel Converters With Passive Front-Ends", IEEE TRANSACTIONS ON POWER ELECTRONICS, INSTITUTE OF ELECTRICAL AND ELECTRONICS ENGINEERS, USA, vol. 23, no. 4, 1 July 2008 (2008-07-01), pages 1751-1758, XP011229657, ISSN: 0885-8993, DOI: 10.1109/TPEL.2008.925182
- AKAGI H ET AL: "A 6.6-kV Transformerless STATCOM Based on a Five-Level Diode-Clamped PWM Converter: System Design and Experimentation of a 200-V 10-kVA Laboratory Model", IEEE TRANSACTIONS ON INDUSTRY APPLICATIONS, IEEE SERVICE CENTER, PISCATAWAY, NJ, US, vol. 44, no. 2, 1 March 2008 (2008-03-01), pages 672-680, XP011280314, ISSN: 0093-9994, DOI: 10.1109/TIA.2008.916713
- KENICHIRO SANO ET AL: "Voltage-Balancing Circuit Based on a Resonant Switched-Capacitor Converter for Multilevel Inverters", IEEE TRANSACTIONS ON INDUSTRY APPLICATIONS, IEEE SERVICE CENTER, PISCATAWAY, NJ, US, vol. 44, no. 6, 1 November 2008 (2008-11-01), pages 1768-1776, XP011238365, ISSN: 0093-9994, DOI: 10.1109/TIA.2008.2006291
- WONG YONG-SENG ET AL: "Design a novel nine level AC to DC multilevel inverter based on FPGA controllar", 2014 INTERNATIONAL POWER ELECTRONICS AND APPLICATION CONFERENCE AND EXPOSITION, IEEE, 5 November 2014 (2014-11-05), pages 1177-1180, XP032734616, DOI: 10.1109/PEAC.2014.7038027 [retrieved on 2015-02-09]
- XIBO YUAN.: 'A New Four-level it-type Converter with Neutral Point Voltage Balancing Capability' ENERGY CONVERSION CONGRESS AND EXPOSITION 18 September 2014, XP032680844

## Description

### TECHNICAL FIELD

Embodiments of the present invention relate to the circuit field, and more specifically, to a circuit of a multi-level topology and a power converter.

### BACKGROUND

In the medium-voltage and large-capacity field, multi-level inverters are applied more widely. In a high-voltage direct current bus system, a multi-level inverter can select a more voltage-withstanding bus capacitor, and can reduce, at same power, an output current by increasing an output alternating voltage, thereby greatly reducing cable costs. In addition, as a level quantity is increased, an output ripple of the system is gradually reduced. That is, a smaller filter may be used, thereby improving power density of the system, and reducing filter costs. Therefore, multi-level inverters have a relatively broad application prospect.

For example, CN 102 664 514 A refers to a switch tube unit, four types of five-level inverters with the same and a power generation system with the inverters. The switch tube unit comprises eight switch tubes, each switch tube is connected with a diode in an antiparallel manner, each five-level inverter is provided with the switch tube unit and further consists of a capacitor C1, a capacitor C2, a capacitor C3 and a capacitor C4, the four capacitors of each five-level inverter are connected to two ends of a direct-current power source in parallel after being serially connected, a positive direct-current input end and a negative direct-current input end of each switch unit are respectively connected to a positive output end and a negative output end of the corresponding direct-current power source, A first level end of each switch tube unit is connected to a joint of the corresponding capacitor C1 and the corresponding capacitor C2, a second level end of each switch tube unit is connected to a joint of the corresponding capacitor C2 and the corresponding capacitor C3, and a third level end of each switch tube unit is connected to a joint of the corresponding capacitor C3 and the corresponding capacitor C4. CN 102 664 514 A and CN 102 594 181 A both disclose a power converter comprising a circuit of a multi-level topology comprising five terminals and six switching elements, however they do not disclose the second terminal and the third terminal respectively connected to a first input end and a second input end of a first direct current/direct current conversion circuit, and the first terminal and the second terminal respectively connected to a first output end and a second output end of the first direct current/direct current conversion circuit; and the second terminal and the third terminal respectively connected to a first input end and a second input end of a second direct current/direct current conversion circuit, and the third terminal and the fourth terminal respectively connected to a first output end and a second output end of the second direct current/direct current conversion circuit; wherein the first direct current/direct current conversion circuit and the second direct current/direct current conversion circuit share a same input port,the second terminal connected to a positive electrode of the input voltage source, and the third terminal connected to a negative electrode of the input voltage source. also

Further, EP 2 582 031A1 refers to an even-level inverter, including: a voltage-dividing circuit dividing input DC power into an even number of voltage levels; a plurality of switching devices connected to individual nodes of the voltage-dividing circuit having the even number of voltage levels; and a bidirectional switching device connected to the individual nodes of the voltage-dividing circuit through at least one of the plurality of switching devices and including at least two transistors.

However, in a multi-level topology used for an existing multi-level inverter, switching elements need relatively high withstand voltages. Consequently, a loss is relatively high when the switching elements are conducted, thereby leading to excessively low performance. In addition, the switching elements having relatively high withstand voltages may also lead to excessively high costs of the multi-level inverter.

### SUMMARY

Embodiments of the present invention provide a circuit of a multi-level topology and a power converter, so that switching elements need relatively low withstand voltages, thereby ensuring performance The invention is defined by the independent claim. Without prejudice to Article 69 EPC and its Protocol, the technical features of the independent claim are not optional, irrespective of any statements to the contrary in the following passages.

In a first aspect a power converter is provided comprising:
- a circuit of a multi-level topology comprising: five terminals and six switching elements, wherein a first end of a first switching element of the six switching elements is connected to a first terminal of the five terminals, and a second end of the first switching element is connected to a fifth terminal of the five terminals;
   a first end of a second switching element of the six switching elements is connected to a second terminal of the five terminals, and a second end of the second switching element is connected to a first end of a first branch;
   a second end of a third switching element of the six switching elements is connected to a third terminal of the five terminals, and a first end of the third switching element is connected to the first end of the first branch, wherein the first branch comprises a fourth switching element and a fifth switching element that are connected in series; and the first end of the first branch is connected to a first end of the fourth switching element and a second end of the first branch is connected to a first end of the fifth switching element, or the first end of the first branch is connected to a second end of the fourth switching element and a second end of the first branch is connected to a second end of the fifth switching element;
   a second end of a sixth switching element of the six switching elements is connected to a fourth terminal of the five terminals, and a first end of the sixth switching element is connected to the fifth terminal; and
      the second end of the first branch is connected to the fifth terminal,
   wherein the second terminal and the third terminal are respectively connected to a first input end and a second input end of a first direct current/direct current conversion circuit, and the first terminal and the second terminal are respectively connected to a first output end and a second output end of the first direct current/direct current conversion circuit; and
   the second terminal and the third terminal are respectively connected to a first input end and a second input end of a second direct current/direct current conversion circuit, and the third terminal and the fourth terminal are respectively connected to a first output end and a second output end of the second direct current/direct current conversion circuit; wherein
   the first direct current/direct current conversion circuit and the second direct current/direct current conversion circuit share a same input port,
- an input voltage source, and
- a controller,
- wherein the second terminal is connected to a positive electrode of the input voltage source, and the third terminal is connected to a negative electrode of the input voltage source; and
   the controller is connected to the six switching elements, and is configured to control statuses of the six switching elements,
   wherein a value of an input voltage of the input voltage source is DC1, a value of a voltage that is between the first terminal and the second terminal after the first direct current/direct current conversion circuit is DC2, and a value of a voltage that is between the third terminal and the fourth terminal after the second direct current/direct current conversion circuit is DC3; and
   when the controller controls statuses of the first switching element, the second switching element, and the fourth switching element to be a first state, and statuses of the third switching element, the fifth switching element, and the sixth switching element to be a second state, a value of an output voltage between the fourth terminal and the fifth terminal is DC1+DC2+DC3;
   when the controller controls statuses of the second switching element, the fourth switching element, and the fifth switching element to be a first state, and statuses of the first switching element, the third switching element, and the sixth switching element to be a second state, a value of an output voltage between the fourth terminal and the fifth terminal is DC1+DC3;
   when the controller controls statuses of the third switching element, the fourth switching element, and the fifth switching element to be a first state, and statuses of the first switching element, the second switching element, and the sixth switching element to be a second state, a value of an output voltage between the fourth terminal and the fifth terminal is DC3;
   when the controller controls statuses of the third switching element, the fifth switching element, and the sixth switching element to be a first state, and statuses of the first switching element, the second switching element, and the fourth switching element to be a second state, a value of an output voltage between the fourth terminal and the fifth terminal is 0; wherein
   the first state means that a switching element is conducted in a direction from a first end of the switching element to a second end of the switching element, and is conducted in a direction from the second end of the switching element to the first end of the switching element; and the second state means that a switching element is disconnected in a direction from a first end of the switching element to a second end of the switching element, and is conducted in a direction from the second end of the switching element to the first end of the switching element.

By means of the circuit of a multi-level topology provided in the embodiments of the present invention, switching elements need relatively low withstand voltages, thereby ensuring performance; and the switching elements having low withstand voltages cost relatively low.

### BRIEF DESCRIPTION OF DRAWINGS

To describe the technical solutions in the embodiments of the present invention more clearly, the following briefly describes the accompanying drawings required for describing the embodiments, the examples not falling under the scope of the claim or the prior art. Apparently, the accompanying drawings in the following description show merely some embodiments and examples not falling under the scope of claim of the present invention, and a person of ordinary skill in the art may still derive other drawings from these accompanying drawings without creative efforts.
FIG. 1 is an example of a circuit diagram of a four-level topology used in the prior art;
FIG. 2 is a schematic diagram of a circuit of a multi-level topology according to an example not falling under the scope of the claim of the present invention;
FIG. 3 is a schematic diagram of a circuit of a multi-level topology according to another example not falling under the scope of the claim of the present invention;
FIG. 4 is a schematic structural diagram of a switching element according to an embodiment of the present invention;
FIG. 5 is a schematic diagram of a circuit of a four-level topology according to an example not falling under the scope of the claim of the present invention;
FIG. 6 is a schematic diagram of a buck-boost circuit according to an example not falling under the scope of the claim of the present invention;
FIG. 7 is a schematic diagram of a circuit of a four-level topology according to another example not falling under the scope of the claim of the present invention;
FIG. 8 is a schematic diagram of a circuit of a four-level topology according to another example not falling under the scope of the claim of the present invention;
FIG. 9 is a schematic diagram of a three-phase system according to an example not falling under the scope of the claim of the present invention;
FIG. 10 is a schematic diagram of a circuit of a multi-level topology according to another example not falling under the scope of the claim of the present invention;
FIG. 11 is a schematic diagram of a circuit of a six-level topology according to an example not falling under the scope of the claim of the present invention;
FIG. 12 is a schematic diagram of a circuit of a multi-level topology according to another example not falling under the scope of the claim of the present invention;
FIG. 13 is a schematic diagram of a circuit of a five-level topology according to an example not falling under the scope of the claim of the present invention;
FIG. 14 is a schematic diagram of a composite circuit according to an example not falling under the scope of the claim of the present invention;
FIG. 15 is a schematic block diagram of a power converter according to an example not falling under the scope of the claim of the present invention;
FIG. 16 is a schematic structural diagram of a power converter according to an example not falling under the scope of the claim of the present invention;
FIG. 17 is a schematic diagram of an output voltage of a four-level inverter;
FIG. 18 is a schematic structural diagram of a power converter according to an embodiment of the present invention; and
FIG. 19 is a schematic structural diagram of a power converter according to an embodiment of the present invention.

In the following description the term "embodiment" may have been used for subject-matter that is not part of the invention as defined by the appended claim.Without prejudice to Article 69 EPC and its Protocol, only those examples that comprise all the features of the independent claim are part of the invention and thus embodiment of the invention. Parts of the subject-matter of the description not covered by the claim constitute background art or examples useful for understanding the invention. The following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

An inverter may be configured to convert a direct current into an alternating current. An inverter including a multi-level topology is a multi-level inverter. In addition, a higher quantity of levels indicates smaller harmonic waves and a better output effect.

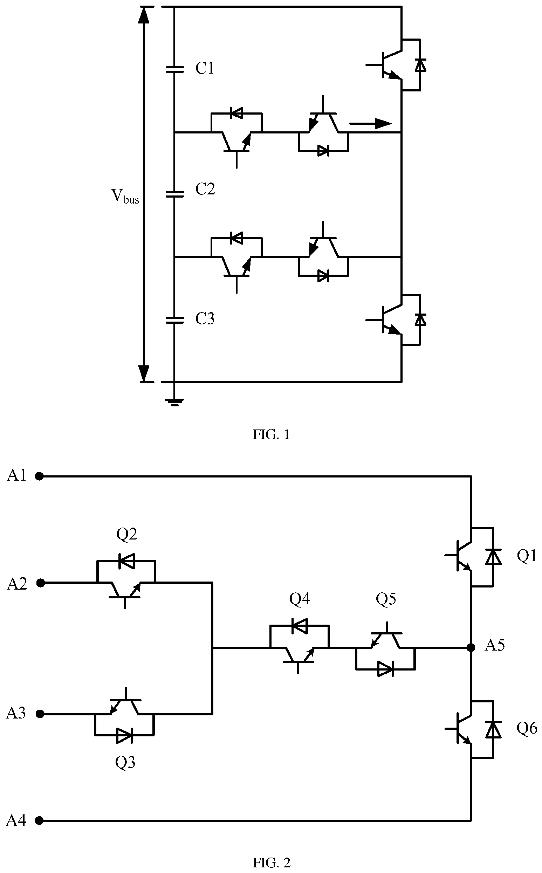

Herein, a four-level topology is used as an example for description. A four-level topology is a topology having four output levels. As shown in FIG. 1, FIG. 1 is a circuit diagram of a four-level topology used in the prior art.

For the four-level topology in FIG. 1, if a bus voltage is V_{bus}, and a secondary bus voltage is used as a reference point, output voltages that can be implemented by controlling switching elements to be conducted or disconnected are: V_{bus}, 2/3 of V_{bus}, 1/3 of V_{bus}, and 0.

However, in a multi-level topology used in an existing multi-level inverter, switching elements need relatively high withstand voltages. In addition, higher withstand voltages of switching components may cause a relatively high loss when the switching components are conducted, leading to excessively low performance. For example, a saturation voltage drop of a switching component having a withstand voltage of 1700 V is 1.4 times a saturation voltage drop of a switching component having a withstand voltage of 650 V.

On another hand, when there is no bus power balanced circuit, the topology shown in FIG. 1 cannot work normally. Specifically, when there is no bus power balanced circuit, the inverter outputs three levels instead of four levels. A quantity of output levels is reduced, sharply lowering performance of the topology. Consequently, components are not fully used.

FIG. 2 is a schematic diagram of a circuit of a multi-level topology according to an embodiment of the present invention. The circuit shown in FIG. 2 includes five terminals (A1 to A5) and six switching elements (Q1 to Q6).

Each switching element has a first end and a second end.

The five terminals (A1 to A5) include a first terminal A1, a second terminal A2, a third terminal A3, a fourth terminal A4, and a fifth terminal A5. The six switching elements (Q1 to Q6) include a first switching element Q1, a second switching element Q2, a third switching element Q3, a fourth switching element Q4, a fifth switching element Q5, and a sixth switching element Q6.

A first end of the first switching element Q1 of the six switching elements is connected to the first terminal A1 of the five terminals, and a second end of the first switching element Q1 is connected to the fifth terminal A5 of the five terminals.

A first end of the second switching element Q2 of the six switching elements is connected to the second terminal A2 of the five terminals, and a second end of the second switching element Q2 is connected to a first end of a first branch.

A second end of the third switching element Q3 of the six switching elements is connected to the third terminal A3 of the five terminals, and a first end of the third switching element Q3 is connected to the first end of the first branch.

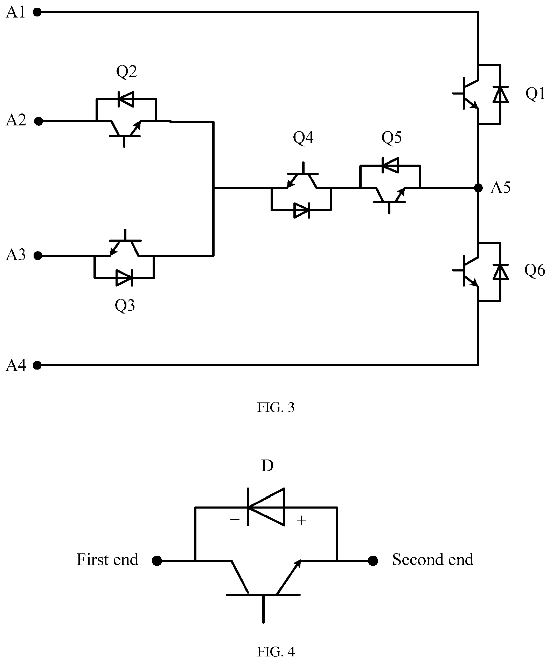

The first branch includes the fourth switching element Q4 and the fifth switching element Q5 that are connected in series; and the first end of the first branch is connected to a first end of the fourth switching element Q4 and a second end of the first branch is connected to a first end of the fifth switching element Q5 (as shown in FIG. 2), or the first end of the first branch is connected to a second end of the fourth switching element Q4 and a second end of the first branch is connected to a second end of the fifth switching element Q5 (as shown in FIG. 3).

A second end of the sixth switching element Q6 of the six switching elements is connected to the fourth terminal A4 of the five terminals, and a first end of the sixth switching element Q6 is connected to the fifth terminal A5.

The second end of the first branch is connected to the fifth terminal A5.

By means of the circuit of a multi-level topology provided in this embodiment of the present invention, switching elements need relatively low withstand voltages, thereby ensuring performance; and the switching elements having low withstand voltages cost relatively low.

It may be understood that, the circuits shown in FIG. 2 and FIG. 3 are circuits of a four-level topology.

It may be understood that, the fourth switching element Q4 and the fifth switching element Q5 are connected in series in a reverse direction.

Optionally, when the switching element is in a conducted state, the switching element is conducted in a direction from a first end of the switching element to a second end of the switching element, and is also conducted in a direction from the second end of the switching element to the first end of the switching element. When the switching element is in a disconnected state, the switching element is disconnected in a direction from a first end of the switching element to a second end of the switching element, and is conducted in a direction from the second end of the switching element to the first end of the switching element.

It should be noted that, a form of a switching element is not limited in this embodiment of the present invention. Each of the six switching elements Q1 to Q6 shown in FIG. 2 and FIG. 3 is formed by a diode (Diode) and a first semiconductor switching transistor that are connected in parallel. As shown in FIG. 4, a negative electrode of a diode D is connected to a first end of a switching element, and a positive electrode of the diode D is connected to a second end of the switching element.

It may be understood that, in this embodiment of the present invention, a switching element may be a switching transistor, or a switching element may be a combination of multiple switching transistors that are connected in series and/or connected in parallel. The switching transistor may be an Insulated Gate Bipolar Transistor (IGBT), or may be a Metal-Oxide-Semiconductor Field-Effect Transistor (MOSFET). This is not limited in the present invention.

In subsequent embodiments of the present invention, the switching element shown in FIG. 4 is used as an example for description. When the switching element shown in FIG. 4 is in a disconnected state, the switching element is conducted in a direction from a first end to a second end, and is also conducted in a direction from the second end to the first end. When the switching element shown in FIG. 4 is in a disconnected state, the switching element is disconnected in the direction from the first end to the second end, and is conducted in the direction from the second end to the first end.

In this embodiment of the present invention, that the switching element shown in FIG. 4 is in a conducted state is referred to as a first state, and that the switching element shown in FIG. 4 is in a disconnected state is referred to as a second state. That is, the first state means that a switching element is conducted in a direction from a first end of the switching element to a second end of the switching element, and is conducted in a direction from the second end of the switching element to the first end of the switching element. The second state means that a switching element is disconnected in a direction from a first end of the switching element to a second end of the switching element, and is conducted in a direction from the second end of the switching element to the first end of the switching element.

In addition, the circuit of a multi-level topology provided in this embodiment of the present invention may be driven and controlled in a manner of combining software with hardware, thereby implementing direct current/alternating current (Direct Current/Alternating Current, DC/AC) conversion or alternating current/direct current (AC/DC) conversion.

For example, using DC/AC as an example, the first terminal A1, the second terminal A2, the third terminal A3, and the fourth terminal A4 in the circuit of a four-level topology shown in FIG. 2 or FIG. 3 are used as input ends; and the fourth terminal A4 and the fifth terminal A5 are used as output ends. The fourth terminal A4 may be grounded, that is, the fourth terminal A4 may be used as a voltage reference point.

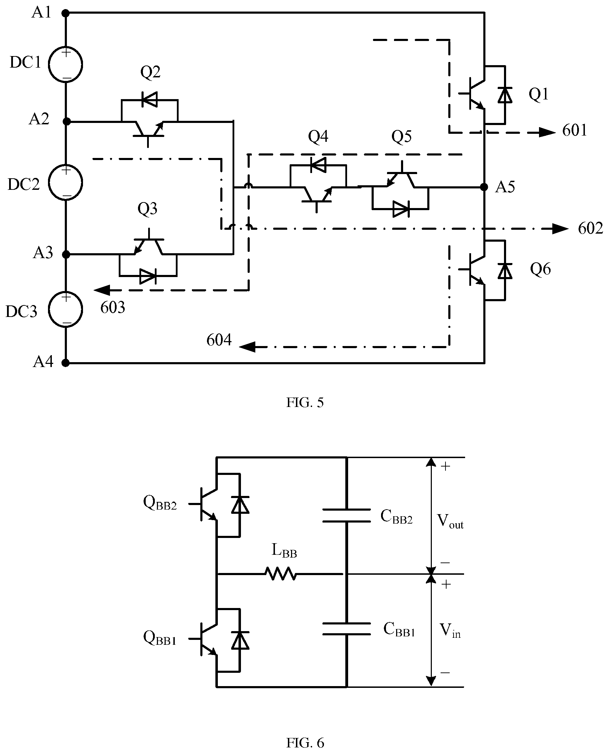

Optionally, in an embodiment, as shown in FIG. 5, the first terminal A1 is connected to a positive electrode of a first voltage source DC1, and the second terminal is connected to a negative electrode of the first voltage source DC1. The second terminal is connected to a positive electrode of a second voltage source DC2, and the third terminal is connected to a negative electrode of the second voltage source DC2. The third terminal is connected to a positive electrode of a third voltage source DC3, and the fourth terminal is connected to a negative electrode of the third voltage source DC3.

In this embodiment of the present invention, DC1, DC2, and DC3 that have constant voltages are used, thereby resolving a problem in the prior art that switching elements cannot normally work due to use of capacitors.

It may be understood that, for the fourth switching element Q4 and the fifth switching element Q5 in FIG. 5, a series connection manner in FIG. 3 may also be used.

It should be noted that, in the circuit of a four-level topology shown in FIG. 5, voltages of DC1, DC2, and DC3 may be equal, or may not be equal. This is not limited in the present invention. It may be understood that the bus voltage V_{bus}=DC1+DC2+DC3.

In this way, the circuit of a four-level topology shown in FIG. 5 can implement voltages of four output levels by controlling switching elements to be conducted or disconnected. Specifically, the voltages of the four output levels may be shown in the following Table 1.

**Table 1**

| Level | Q1 | Q2 | Q3 | Q4 | Q5 | Q6 |
|---|---|---|---|---|---|---|
| DC1+DC2+DC3 | 1 | 1 | 0 | 1 | 0 | 0 |
| DC2+DC3 | 0 | 1 | 0 | 1 | 1 | 0 |
| DC3 | 0 | 0 | 1 | 1 | 1 | 0 |
| 0 | 0 | 0 | 1 | 0 | 1 | 1 |

"1" in Table 1 indicates that a status of a corresponding switching element is a first state, and "0" indicates that a status of a corresponding switching element is a second state.

It is assumed that an output level DC1+DC2+DC3 is a level 1. In this case, an active current of the circuit of a four-level topology may be shown by a dashed arrow 601 in FIG. 5. It is assumed that an output level DC2+DC3 is a level 2. In this case, an active current of the circuit of a four-level topology may be shown by a dot-dash line arrow 602 in FIG. 5. It is assumed that an output level DC3 is a level 3. In this case, an active current of the circuit of a four-level topology may be shown by a dashed arrow 603 in FIG. 5. It is assumed that an output level 0 is a level 4. In this case, an active current of the circuit of a four-level topology may be shown by a dot-dash line arrow 604 in FIG. 5.

If it is assumed that DC1=DC2=DC3=500 V, a maximum voltage that flows through Q1 and Q6 is 1500 V, and a maximum voltage that flows through Q2 and Q5 is 500 V. In consideration of a particular preset voltage, in this embodiment of the present invention, Q1 and Q6 should be switching components having a withstand voltage of 1700 V, and Q2 to Q5 should be switching components having a withstand voltage of 700 V. Therefore, compared with the prior art, two switching elements of six switching elements may be switching components having low withstand voltages, thereby reducing costs. In addition, it may be understood that, if DC1>DC2>DC3, switching components having lower withstand voltages may be used, thereby further reducing costs.

In addition, the switching components having relatively low withstand voltages are used, and therefore, a loss is reduced, thereby improving system performance.

Optionally, in another embodiment, the circuit of a multi-level topology may be implemented by using a direct current/direct current (Direct Current/Direct Current, DC/DC) conversion circuit. Optionally, the DC/DC conversion circuit may be a buck-boost circuit. For example, the DC/DC conversion circuit may be a buck-boost circuit, as shown in FIG. 6.

The buck-boost circuit includes switching elements Q_{BB1} and Q_{BB2}, capacitors C_{BB1} and C_{BB2}, and an inductor L_{BB}. It is assumed that a voltage between two ends of the capacitor C_{BB1} is equal to Vᵢₙ, and a voltage between two ends of the capacitor C_{BB2} is equal to Vₒᵤₜ. Then, when Vᵢₙ is constant, Vₒᵤₜ may be adjusted by adjusting a conduction ratio of the buck-boost circuit.

That is, Vᵢₙ may be used as an input of the buck-boost circuit, and Vₒᵤₜ may be used as an output of the buck-boost circuit. Correspondingly, two ends of C_{BB1} are two input ends of the buck-boost circuit, and two ends of C_{BB2} are two output ends of the buck-boost circuit.

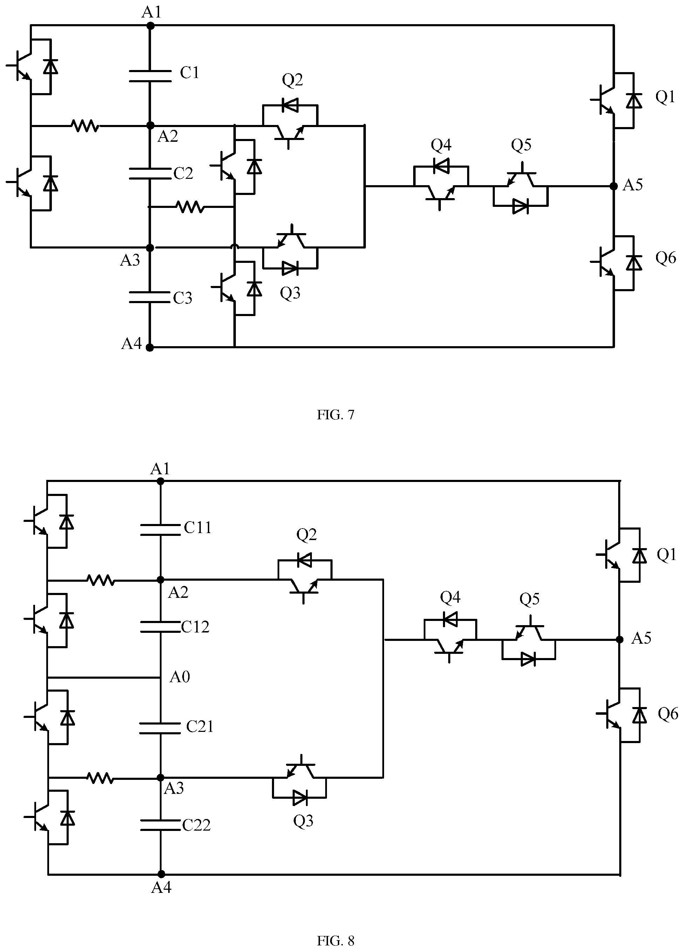

Optionally, the circuit of a multi-level topology that is implemented by using a DC/DC conversion circuit may be shown in FIG. 7.

The second terminal A2 and the third terminal A3 are respectively connected to a first input end and a second input end of a first DC/DC conversion circuit, and the first terminal A1 and the second terminal A2 are respectively connected to a first output end and a second output end of the first DC/DC conversion circuit. The second terminal A2 and the third terminal A3 are respectively connected to a first input end and a second input end of a second DC/DC conversion circuit, and the third terminal A3 and the fourth terminal A4 are respectively connected to a first output end and a second output end of the second DC/DC conversion circuit. The first DC/DC conversion circuit and the second DC/DC conversion circuit share a same input.

Specifically, as shown in FIG. 7, the first DC/DC conversion circuit is a first buck-boost circuit, and the second DC/DC conversion circuit is a second buck-boost circuit. The first buck-boost circuit includes C1 and C2, and the second buck-boost circuit includes C2 and C3.

Therefore, if the second terminal A2 is connected to a positive electrode of a voltage source DC0, and the third terminal A3 is connected to a negative electrode of the voltage source DC0, by means of the first DC/DC conversion circuit, a voltage between the first terminal A1 and the second terminal A2 may be determined as DC01; and by means of the second DC/DC conversion circuit, a voltage between the third terminal and the fourth terminal may be determined as DC02.

Referring to FIG. 5, it may be known that DC01 in FIG. 7 may be equivalent to DC1 in FIG. 5, DC0 in FIG. 7 may be equivalent to DC2 in FIG. 5, and DC02 in FIG. 7 may be equivalent to DC3 in FIG. 5.

Therefore, similarly, outputting of four levels can be implemented by controlling statuses of the switching elements Q1 to Q6. To avoid repetition, details are not described herein again.

It should be noted that, in the four-level topology shown in FIG. 7, the bus voltage may be adjusted by adjusting a conduction ratio of the first buck-boost circuit and/or a conduction ratio of the second buck-boost circuit, thereby implementing flexible control on outputting of the four levels.

Optionally, the circuit of a multi-level topology that is implemented by using a DC/DC conversion circuit may be shown in FIG. 8.

The first terminal is connected to a first output end of a first DC/DC conversion circuit, and the second terminal A2 is connected to a second output end of the first DC/DC conversion circuit; the second terminal A2 is connected to a first input end of the first DC/DC conversion circuit; a second input end of the first DC/DC conversion circuit is connected to a first input end of a second DC/DC conversion circuit; the third terminal A3 is connected to a second input end of the second DC/DC conversion circuit; and the fourth terminal A4 is connected to a first output end of the second DC/DC conversion circuit, and the third terminal is connected to a second output end of the second DC/DC conversion circuit.

Specifically, as shown in FIG. 8, the first DC/DC conversion circuit is a first buck-boost circuit, and the second DC/DC conversion circuit is a second buck-boost circuit. The first buck-boost circuit includes C11 and C12, and the second buck-boost circuit includes C21 and C22.

Therefore, if the second terminal A2 is connected to a positive electrode of a voltage source DC 10, a terminal A0 between C12 and C21 is connected to a negative electrode of the voltage source DC10, the terminal A0 between C12 and C21 is connected to a positive electrode of a voltage source DC20, and the third terminal A3 is connected to a negative electrode of the voltage source DC20, by means of the first buck-boost circuit, a voltage between the first terminal A1 and the second terminal A2 may be determined as DC11; and by means of the second buck-boost circuit, a voltage between the third terminal and the fourth terminal may be determined as DC22.

Referring to FIG. 5, it may be known that DC11 in FIG. 8 may be equivalent to DC1 in FIG. 5, DC10+DC20 in FIG. 8 may be equivalent to DC2 in FIG. 5, and DC22 in FIG. 8 may be equivalent to DC3 in FIG. 5.

Therefore, similarly, outputting of four levels can be implemented by controlling statuses of the switching elements Q1 to Q6. To avoid repetition, details are not described herein again.

It should be noted that, in the four-level topology shown in FIG. 8, the bus voltage may be adjusted by adjusting a conduction ratio of the first buck-boost circuit and/or a conduction ratio of the second buck-boost circuit, thereby implementing flexible control on outputting of the four levels.

It should be noted that, for the fourth switching element Q4 and the fifth switching element Q5 in FIG. 7 and FIG. 8, the series connection manner in FIG. 3 may also be used. In the buck-boost circuit shown in FIG. 7 and FIG. 8, another DC/DC converter may also be used. This is not limited in this embodiment of the present invention. For example, the input end in FIG. 2 or FIG. 3 may be connected to an output end of a converter or an output end of a rectifier. That is, an output of a converter or an output of a rectifier may be used as an input of the circuit of a multi-level topology.

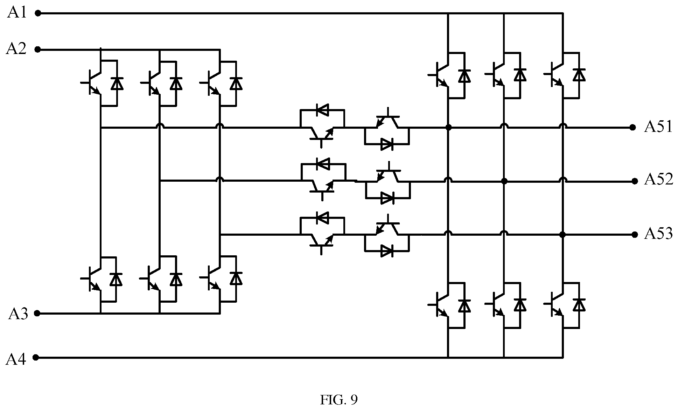

Optionally, in another embodiment, based on the circuit of a four-level topology in FIG. 2 or FIG. 3, a three-phase system may be implemented, as shown in FIG. 9. It may be seen that, the three-phase system shown in FIG. 9 includes three fifth ports, which are respectively A51, A52, and A53.

It may be understood that, the three-phase system shown in FIG. 9 includes three four-level topologies that share a first port to a fourth port.

Optionally, the fourth terminal A4 may be grounded.

Optionally, the first terminal A1, the second terminal A2, the third terminal A3, and the fourth terminal A4 may be used as input ends. For example, three voltage sources may be connected to A1 to A4, as shown in FIG. 5. Alternatively, two DC/DC conversion circuits may be connected to A1 to A4, as shown in FIG. 7 or FIG. 8.

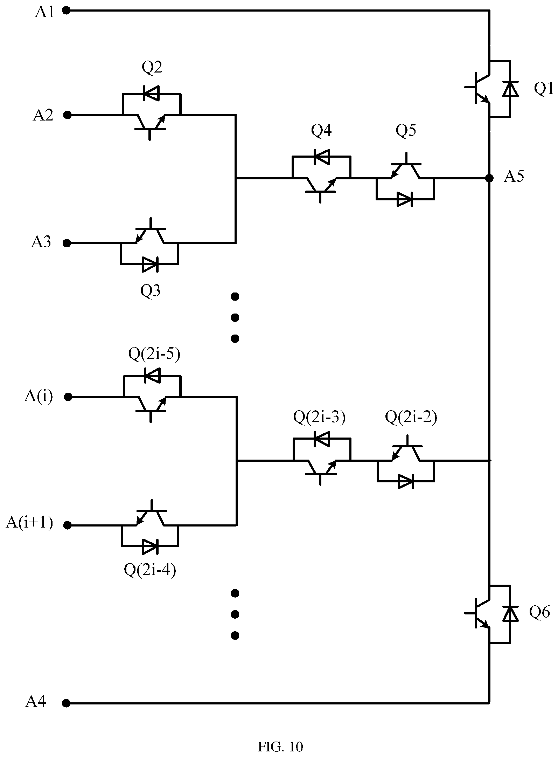

Optionally, in another embodiment, a topology having more levels may be established based on the four-level topology shown in FIG. 2 or FIG. 3. For example, a multi-level topology established based on what is shown in FIG. 2 is an N-level topology, where N is an even number greater than 4. As shown in FIG. 10, the circuit further includes: N-4 terminals and 2N-8 switching elements, where the N-4 terminals include a sixth terminal to an (N+1)^{th} terminal, and the 2N-8 switching elements include a seventh switching element to a (2N-2)^{th} switching element.

A first end of a (2i-5)^{th} switching element Q(2i-5) is connected to an i^{th} terminal A(i), and a second end of the (2i-5)^{th} switching element Q(2i-5) is connected to a first end of an ((i-2)/2)^{th} branch, where i=6, 7, ..., or N.

A second end of a (2i-4)^{th} switching element Q(2i-4) is connected to an (i+1)^{th} terminal A(i+1), and the second end of the (2i-4)^{th} switching element Q(2i-4) is connected to the first end of the ((i-2)/2)^{th} branch, where the ((i-2)/2)^{th} branch includes a (2i-3)^{th} switching element Q(2i-3) and a (2i-2)^{th} switching element Q(2i-2) that are connected in series; and the first end of the ((i-2)/2)^{th} branch is connected to a first end of the (2i-3)^{th} switching element Q(2i-3) and a second end of the ((i-2)/2)^{th} branch is connected to a first end of the (2i-2)^{th} switching element Q(2i-2), or the first end of the ((i-2)/2)^{th} branch is connected to a second end of the (2i-3)^{th} switching element Q(2i-3) and a second end of the ((i-2)/2)^{th} branch is connected to a second end of the (2i-2)^{th} switching element Q(2i-2).

The second end of the ((i-2)/2)^{th} branch is connected to the fifth terminal A5.

Therefore, DC/AC conversion can be implemented by using the multi-level topology. For example, a direct current voltage source may be connected between the first terminal A1 and the second terminal A2, between the second terminal A2 and the third terminal A3, between the third terminal A3 and the sixth terminal A6, between the i^{th} terminal A(i) and the (i+1)^{th} terminal A(i+1), and between the (N+1)^{th} terminal A(N+1) and the fourth terminal A4. Then, outputting of N levels can be implemented by adjusting statuses of the switching elements. In addition, after a filter, voltages output from the fourth terminal A4 and the fifth terminal A5 are closer to a sine, that is, the output voltages are alternating voltages.

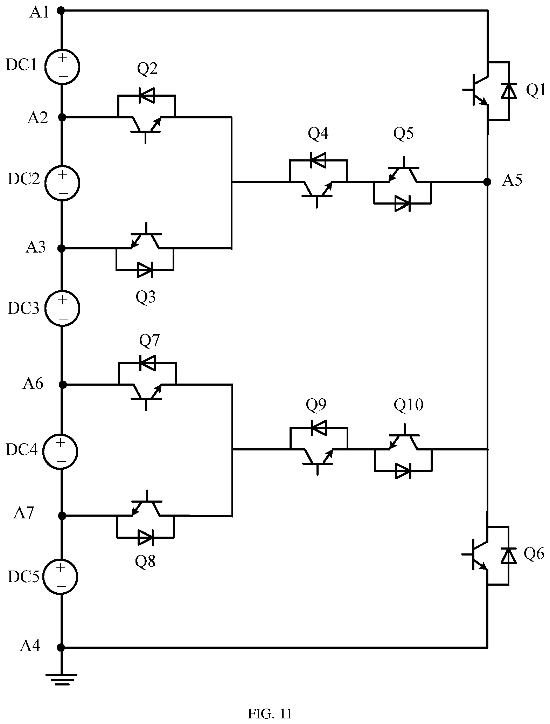

Specifically, when N=6, a circuit of a six-level topology may be shown in FIG. 11, and includes: seven terminals (A1 to A7) and ten switching elements (Q1 to Q10).

The seven terminals (A1 to A7) include a first terminal A1, a second terminal A2, a third terminal A3, a fourth terminal A4, and a fifth terminal A5, a sixth terminal A6, and a seventh terminal A7. The ten switching elements (Q1 to Q10) include a first switching element Q1, a second switching element Q2, a third switching element Q3, a fourth switching element Q4, a fifth switching element Q5, a sixth switching element Q6, a seventh switching element Q7, an eighth switching element Q8, a ninth switching element Q9, and a tenth switching element Q10.

A first end of the first switching element Q1 is connected to the first terminal A1, and a second end of the first switching element Q1 is connected to the fifth terminal A5.

A first end of the second switching element Q2 is connected to the second terminal A2, and a second end of the second switching element Q2 is connected to a first end of a first branch; and a second end of the third switching element Q3 is connected to the third terminal A3, and a first end of the third switching element Q3 is connected to the first end of the first branch, where the first branch includes the fourth switching element Q4 and the fifth switching element Q5 that are connected in series; and the first end of the first branch is connected to a first end of the fourth switching element Q4, and a second end of the first branch is connected to a first end of the fifth switching element Q5.

A first end of the seventh switching element Q7 is connected to the sixth terminal A6, and a second end of the seventh switching element Q7 is connected to a first end of a second branch; and a second end of the eighth switching element Q8 is connected to the seventh terminal A7, and a first end of the eighth switching element Q8 is connected to the first end of the second branch, where the second branch includes the ninth switching element Q9 and the tenth switching element Q10 that are connected in series; and the first end of the second branch is connected to a first end of the ninth switching element Q9, and a second end of the second branch is connected to a first end of the tenth switching element Q10.

A second end of the sixth switching element Q6 is connected to the fourth terminal A4, and a first end of the sixth switching element Q6 is connected to the fifth terminal A5.

The second end of the first branch is connected to the fifth terminal A5, and the second end of the second branch is connected to the fifth terminal A5.

In addition, the circuit of a six-level topology shown in FIG. 11 further includes five direct current voltage sources. Specifically, the first terminal A1 is connected to a positive electrode of a first voltage source DC1, and the second terminal A2 is connected to a negative electrode of the first voltage source DC1. The second terminal A2 is connected to a positive electrode of a second voltage source DC2, and the third terminal A3 is connected to a negative electrode of the second voltage source DC2. The third terminal A3 is connected to a positive electrode of a third voltage source DC3, and the sixth terminal A6 is connected to a negative electrode of the third voltage source DC3. The sixth terminal A6 is connected to a positive electrode of a fourth voltage source DC4, and the seventh terminal A7 is connected to a negative electrode of the fourth voltage source DC4. The seventh terminal A7 is connected to a positive electrode of a fifth voltage source DC5, and the fourth terminal A4 is connected to a negative electrode of the fifth voltage source DC5.

The fourth terminal A4 may be grounded.

Therefore, outputting of six levels can be implemented by adjusting statuses of the switching elements.

For example, it is assumed that the five direct current voltage sources have equal voltage values, that is, DC1=DC2=DC3=DC4=DC5=DC. Voltages of six output levels can be implemented by controlling the switching elements to be conducted or disconnected. Specifically, the voltages of the six output levels may be shown in the following Table 2.

**Table 2**

| Level | Q1 | Q2 | Q3 | Q4 | Q5 | Q6 | Q7 | Q8 | Q9 | Q10 |
|---|---|---|---|---|---|---|---|---|---|---|
| 5DC | 1 | 1 | 0 | 1 | 0 | 0 | 1 | 0 | 1 | 0 |
| 4DC | 0 | 1 | 0 | 1 | 1 | 0 | 1 | 0 | 1 | 0 |
| 3DC | 0 | 0 | 1 | 1 | 1 | 0 | 1 | 0 | 1 | 0 |
| 2DC | 0 | 0 | 1 | 0 | 1 | 0 | 1 | 0 | 1 | 1 |
| DC | 0 | 0 | 1 | 0 | 1 | 0 | 0 | 1 | 1 | 1 |
| 0 | 0 | 0 | 1 | 0 | 1 | 1 | 0 | 1 | 0 | 1 |

"1" indicates that a status of a switching element is a first state, and "0" indicates that a status of a switching element is a second state.

In the circuit of a multi-level topology shown in FIG. 10 or FIG. 11, the switching elements may be switching transistors having relatively low withstand voltages, thereby reducing costs. In addition, the switching components having relatively low withstand voltages are used, and therefore, a loss is reduced, thereby improving system performance.

It should be noted that, for the fourth switching element Q4 and the fifth switching element Q5 in FIG. 10 and FIG. 11, the series connection manner in FIG. 3 may also be used. For the (2i-3)^{th} switching element Q(2i-3) and the (2i-2)^{th} switching element Q(2i-2) in FIG. 10, and the ninth switching element Q9 and the tenth switching element Q10 in FIG. 11, the same series connection manner may also be used. This is not limited in the present invention.

It should be noted that, in the circuit of a multi-level topology shown in FIG. 10, the first terminal A1 to the fourth terminal A4, and the sixth terminal A6 to the (N+1)^{th} terminal may be used as input ends of the circuit of a multi-level topology. The fourth terminal A4 and the fifth terminal A5 may be used as output ends of the circuit of a multi-level topology.

It may be understood that, referring to the foregoing description of the four-level topology, the input end of the circuit of a multi-level topology shown in FIG. 10 may be connected to voltage sources, or may be connected to multiple DC/DC conversion circuits as inputs. To avoid repetition, details are not described herein again.

In addition, referring to the foregoing description of FIG. 9, similarly, a three-phase system of a multi-level topology may be obtained by using the circuit of a multi-level topology shown in FIG. 10. To avoid repetition, details are not described herein again.

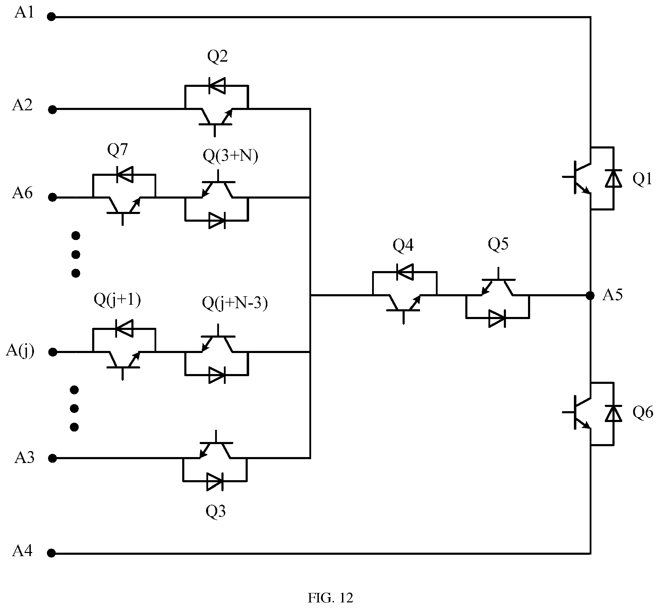

Optionally, in another embodiment, a topology having more levels may be established based on the four-level topology shown in FIG. 2 or FIG. 3. For example, a multi-level topology established based on what is shown in FIG. 2 is an N-level topology. As shown in FIG. 12, the circuit further includes: N-4 terminals and 2N-8 switching elements, where the N-4 terminals include a sixth terminal A6 to an (N+1)^{th} terminal A(N+1), and the 2N-8 switching elements include a seventh switching element Q7 to a (2N-2)^{th} switching element Q(2N-2), and N is a positive integer greater than 4.

A first end of a (j+1)^{th} switching element Q(j+1) is connected to a j^{th} terminal A(j), a second end of the (j+1)^{th} switching element Q(j+1) is connected to a second end of the (j+N-3)^{th} switching element Q(j+N-3), and a first end of the (j+N-3)^{th} switching element Q(j+N-3) is connected to the first end of the first branch, where j=6, 7, ..., or N+1.

Therefore, DC/AC conversion can be implemented by using the multi-level topology. For example, a direct current voltage source may be connected between the first terminal A1 and the second terminal A2, between the second terminal A2 and the sixth terminal A6, between the j^{th} terminal A(j) and the (j+1)^{th} terminal A(j+1), between the (N+1)^{th} terminal A(N+1) and the third terminal A3, and between the third terminal A3 and the fourth terminal A4. Then, outputting of N levels can be implemented by adjusting statuses of the switching elements. In addition, after a filter, voltages output from the fourth terminal A4 and the fifth terminal A5 are closer to a sine, that is, the output voltages are alternating voltages.

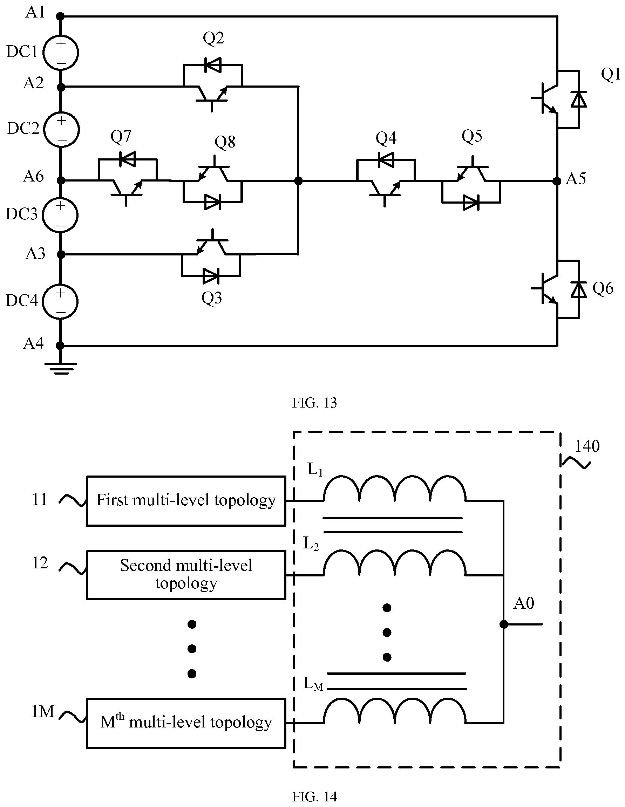

Specifically, when N=5, the multi-level topology is a five-level topology, and a circuit of the five-level topology may be shown in FIG. 13, and includes: six terminals (A1 to A6) and eight switching elements (Q1 to Q8).

The six terminals (A1 to A6) include a first terminal A1, a second terminal A2, a third terminal A3, a fourth terminal A4, a fifth terminal A5, and a sixth terminal A6. The eight switching elements (Q1 to Q8) include a first switching element Q1, a second switching element Q2, a third switching element Q3, a fourth switching element Q4, a fifth switching element Q5, and a sixth switching element Q6, a seventh switching element Q7, and an eighth switching element Q8.

A first end of the first switching element Q1 is connected to the first terminal A1, and a second end of the first switching element Q1 is connected to the fifth terminal A5.

A first end of the second switching element Q2 is connected to the second terminal A2, and a second end of the second switching element Q2 is connected to a first end of a first branch; and a second end of the third switching element Q3 is connected to the third terminal A3, and a first end of the third switching element Q3 is connected to the first end of the first branch, where the first branch includes the fourth switching element Q4 and the fifth switching element Q5 that are connected in series, and the first end of the first branch is connected to a first end of the fourth switching element Q4, and the second end of the first branch is connected to a first end of the fifth switching element Q5.

A first end of the seventh switching element Q7 is connected to the sixth terminal A6, a second end of the seventh switching element Q7 is connected to a second end of the eighth switching element Q8, and a first end of the eighth switching element Q8 is connected to the first end of the first branch.

A second end of the sixth switching element Q6 is connected to the fourth terminal A4, and a first end of the sixth switching element Q6 is connected to the fifth terminal A5.

The second end of the first branch is connected to the fifth terminal A5.

In addition, the circuit of a five-level topology shown in FIG. 13 further includes four direct current voltage sources. Specifically, the first terminal A1 is connected to a positive electrode of a first voltage source DC1, and the second terminal A2 is connected to a negative electrode of the first voltage source DC1. The second terminal A2 is connected to a positive electrode of a second voltage source DC2, and the sixth terminal A6 is connected to a negative electrode of the second voltage source DC2. The sixth terminal A6 is connected to a positive electrode of a third voltage source DC3, and the third terminal A3 is connected to a negative electrode of the third voltage source DC3. The third terminal A3 is connected to a positive electrode of a fourth voltage source DC4, and the fourth terminal A4 is connected to a negative electrode of the fourth voltage source DC4.

The fourth terminal A4 may be grounded.

Therefore, outputting of five levels can be implemented by adjusting statuses of the switching elements.

For example, it is assumed that the four direct current voltage sources have equal voltage values, that is, DC1=DC2=DC3=DC4=DC5=DC. Voltages of five output levels can be implemented by controlling the switching elements to be conducted or disconnected. Specifically, the voltages of the five output levels may be shown in the following Table 3.

**Table 3**

| Level | Q1 | Q2 | Q3 | Q4 | Q5 | Q6 | Q7 | Q8 |
|---|---|---|---|---|---|---|---|---|
| 4DC | 1 | 1 | 0 | 1 | 0 | 0 | 1 | 0 |
| 3DC | 0 | 1 | 0 | 1 | 1 | 0 | 1 | 0 |
| 2DC | 0 | 0 | 0 | 1 | 1 | 0 | 1 | 1 |
| DC | 0 | 0 | 1 | 1 | 1 | 0 | 0 | 1 |
| 0 | 0 | 0 | 1 | 0 | 1 | 1 | 0 | 1 |

"1" indicates that a status of a switching element is a first state, and "0" indicates that a status of a switching element is a second state.

In the circuit of a multi-level topology shown in FIG. 12 or FIG. 13, the switching elements may be switching transistors having relatively low withstand voltages, thereby reducing costs. In addition, the switching components having relatively low withstand voltages are used, and therefore, a loss is reduced, thereby improving system performance.

It should be noted that, for the fourth switching element Q4 and the fifth switching element Q5 in FIG. 12 and FIG. 13, the series connection manner in FIG. 3 may also be used.

It should be noted that, in the circuit of a multi-level topology shown in FIG. 12, the first terminal A1 to the fourth terminal A4, and the sixth terminal A6 to the (N+1)^{th} terminal may be used as input ends of the circuit of a multi-level topology. The fourth terminal A4 and the fifth terminal A5 may be used as output ends of the circuit of a multi-level topology.

It may be understood that, referring to the foregoing description of the four-level topology, the input ends of the circuit of a multi-level topology shown in FIG. 12 may be connected to voltage sources, or may be connected to multiple DC/DC conversion circuits as inputs. To avoid repetition, details are not described herein again.

In addition, referring to the foregoing description of FIG. 9, similarly, a three-phase system of a multi-level topology may be obtained by using the circuit of a multi-level topology shown in FIG. 12. To avoid repetition, details are not described herein again.

Optionally, in another embodiment, the multi-level topology in the foregoing embodiment may be in silicon-magnetic combination with a coupled inductor, to form a composite circuit, so as to achieve a higher quantity of levels. As shown in FIG. 14, the composite circuit includes M multi-level topologies (11 to 1M) and a coupled inductor 140. The M multi-level topologies (11 to 1M) include a first multi-level topology 11, a second multi-level topology 12, ..., and an M multi-level topology 1M. The coupled inductor 140 includes M input terminals and an output terminal A0. The M input terminals correspond to M inductors (L₁ to L_{M}).

The M input terminals are respectively connected to fifth terminals of circuits of the multi-level topologies (11 to 1M).

It may be understood that, the coupled inductor shown in FIG. 14 is an M-phase coupled inductor.

Therefore, in this embodiment, a coupled inductor is combined with multi-level topologies, so as to achieve a higher quantity of levels, improve an equivalent switching frequency, and reduce an output ripple, thereby greatly reducing costs and a volume of an output filter.

For example, it is assumed that the multi-level topologies in FIG. 14 are all N-level topologies. When N is an even number, the N-level topology may be shown in FIG. 10 or FIG. 12. When N is an odd number, the N-level topology may be shown in FIG. 12. It is assumed that a working frequency of the N-level topology is f, then, by means of coupling the N-level topology with the M-phase coupled inductor, an output equivalent switching frequency may be obtained as M×f, and a quantity of output levels is M×N+1. The quantity of output levels and the equivalent switching frequency are greatly increased, and the output ripple is sharply reduced, thereby greatly reducing the costs and the volume of the output filter. In addition, a condition is also provided for reducing the switching frequency. If the switching frequency is reduced, a switching loss may be reduced proportionately, thereby greatly improving efficiency of a converter system.

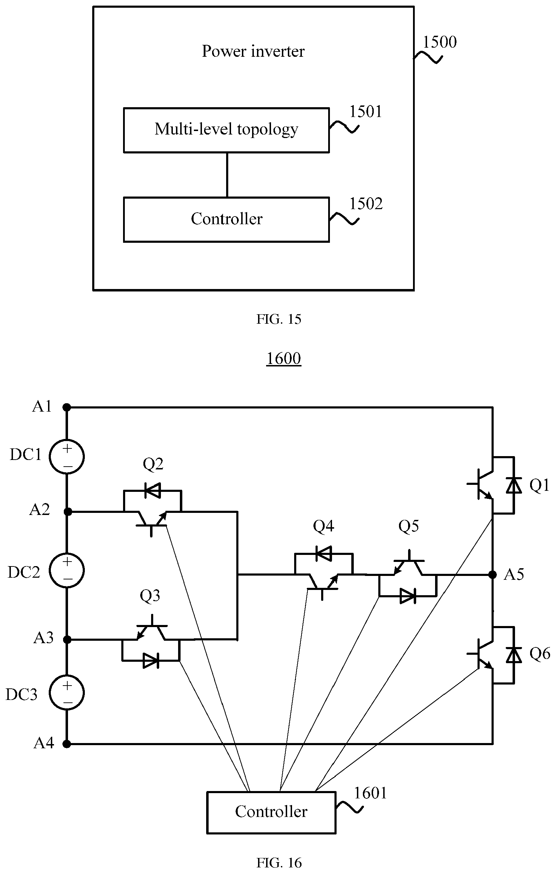

FIG. 15 is a schematic block diagram of a power converter according to an embodiment of the present invention. The power converter 1500 shown in FIG. 15 includes a multi-level topology 1501 and a controller 1502.

For the multi-level topology 1501, refer to the multi-level topology in any one of the foregoing embodiments in FIG. 2, FIG. 3, FIG. 5, or FIG. 7 to FIG. 14.

The controller 1502 may be configured to control statuses of switching elements in the multi-level topology 1501. Specifically, the controller 1502 may change the statuses of the switching elements in a manner of combining hardware with software. The controller 1502 may be in a form of a processor.

The processor may be an integrated circuit chip and have a signal processing capability. In an implementation process, control on the statuses of the switching elements in the multi-level topology may be completed by using an integrated logic circuit of hardware in the processor or an instruction in a form of software. The foregoing processor may be a general purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logical device, discrete gate or transistor logic device, or discrete hardware component. The methods, steps, and logical block diagrams disclosed in the embodiments of the present invention may be implemented or performed. The general purpose processor may be a microprocessor or the processor may be any conventional processor or the like. Steps of the methods disclosed in the embodiments of the present invention may be directly performed and completed by a hardware decoding processor, or may be performed and completed by using a combination of hardware and software modules in the decoding processor.

A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. It may be understood that, the memory in this embodiment of the present invention may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. For example but not for limitation, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory in the system and method described in this specification intends to include, but is not limited to, these memories and any other memory of a suitable type.

Optionally, when the multi-level topology 1501 is the five-level topology shown in the embodiment of FIG. 13, the power converter 1500 may be a five-level inverter.

Optionally, when the multi-level topology 1501 is the six-level topology shown in the embodiment of FIG. 11, the power converter 1500 may be a six-level inverter.

Optionally, when the multi-level topology 1501 is the N-level topology shown in the embodiment of FIG. 10 or FIG. 12, the power converter 1500 may be an N-level inverter.

In an example, in this case, the N-level inverter may further include N-1 input voltage sources. The N-1 input voltage sources may be connected between other terminals except a fifth terminal A5 of (N+1) terminals. Specifically, for a connection manner of the N-1 input voltage sources, refer to descriptions of FIG. 11 or FIG. 13. To avoid repetition, details are not described herein again.

In an example, in this case, the N-level inverter may further include N-2 direct current/direct current conversion circuits. The N-2 direct current/direct current conversion circuits may be connected between other terminals except the fifth terminal A5 of (N+1) terminals. Specifically, for a connection manner of the N-2 direct current/direct current conversion circuit, refer to related descriptions of the four-level topology in FIG. 7 or FIG. 8. To avoid repetition, details are not described herein again.

Optionally, when the multi-level topology 1501 is the four-level topology shown in the embodiment of FIG. 2, FIG. 3, FIG. 5, FIG. 7, or FIG. 8, the power converter 1500 may be a four-level inverter.

Specifically, FIG. 16 is a schematic structural diagram of a power converter according to an embodiment of the present invention. The power converter 1600 shown in FIG. 16 includes the circuit of a four-level topology shown in FIG. 5 and a controller 1601.

The controller 1601 is connected to the six switching elements (Q1 to Q6), and is configured to control statuses of the six switching elements.

It may be understood that, in this embodiment of the present invention, the statuses of switching elements may be changed by means of control of the controller 1601. The switching elements may be shown in FIG. 4.

Optionally, a status of a switching element may be a first state or a second state. The first state means that a switching element is conducted in a direction from a first end of the switching element to a second end of the switching element, and is conducted in a direction from the second end of the switching element to the first end of the switching element; and the second state means that a switching element is disconnected in a direction from a first end of the switching element to a second end of the switching element, and is conducted in a direction from the second end of the switching element to the first end of the switching element.

Therefore, if a value of an input voltage of the first voltage source is DC1, a value of an input voltage of the second voltage source is DC2, and a value of an input voltage of the third voltage source is DC3,
when the controller 1601 controls statuses of the first switching element Q1, the second switching element Q2, and the fourth switching element Q4 to be the first state, and statuses of the third switching element Q3, the fifth switching element Q5, and the sixth switching element Q6 to be the second state, a value of an output voltage between the fourth terminal A4 and the fifth terminal A5 is DC1+DC2+DC3;
when the controller 1601 controls statuses of the second switching element Q2, the fourth switching element Q4, and the fifth switching element Q5 to be the first state, and statuses of the first switching element Q1, the third switching element Q3, and the sixth switching element Q6 to be the second state, a value of an output voltage between the fourth terminal A4 and the fifth terminal A5 is DC2+DC3;
when the controller 1601 controls statuses of the third switching element Q3, the fourth switching element Q4, and the fifth switching element Q5 to be the first state, and statuses of the first switching element Q1, the second switching element Q2, and the sixth switching element Q6 to be the second state, a value of an output voltage between the fourth terminal A4 and the fifth terminal A5 is DC3; or
when the controller 1601 controls statuses of the third switching element Q3, the fifth switching element Q5, and the sixth switching element Q6 to be the first state, and statuses of the first switching element Q1, the second switching element Q2, and the fourth switching element Q4 to be the second state, a value of an output voltage between the fourth terminal A4 and the fifth terminal A5 is 0.

For details, refer to Table 1 in the embodiment of FIG. 5.

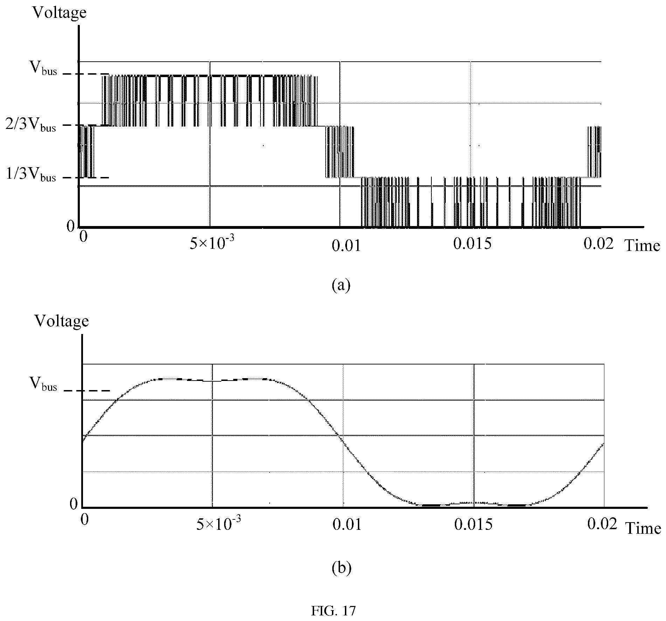

For example, if it is assumed that DC1=DC2=DC3, and DC1+DC2+DC3=V_{bus}, FIG. 17(a) is a schematic diagram of an output voltage of the power converter 1600, and FIG. 17(b) is a schematic diagram of an output voltage of the power converter 1600 after filtering.

A higher quantity of levels indicates that an output voltage is closer to a sine, and therefore, a size and costs of a required filter are greatly reduced, which is helpful for achieving high system power density.

Optionally, the power converter 1600 shown in FIG. 16 may be a four-level inverter.

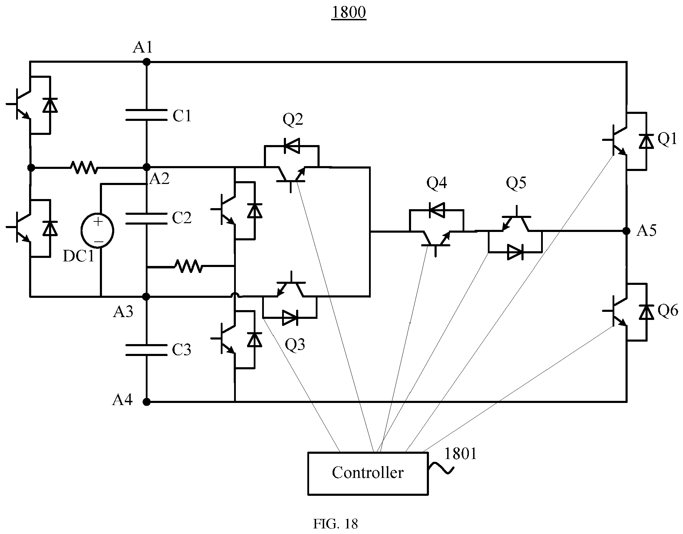

FIG. 18 is a schematic structural diagram of a power converter according to another embodiment of the present invention. The power converter 1800 shown in FIG. 18 includes the circuit of a four-level topology shown in FIG. 7, an input voltage source DC1, and a controller 1801.

The second terminal A2 is connected to a positive electrode of the input voltage source DC1, and the third terminal A3 is connected to a negative electrode of the input voltage source DC1.

The controller 1801 is connected to the six switching elements (Q1 to Q6), and is configured to control statuses of the six switching elements.

In addition, the controller 1801 may also be connected to a switching element in a first direct current/direct current conversion circuit, and control a status of the switching element in the first direct current/direct current conversion circuit; and the controller 1801 may also be connected to a switching element in a second direct current/direct current conversion circuit, and control a status of the switching element in the second direct current/direct current conversion circuit.

If a value of an input voltage of the input voltage source is DC1, a value of a voltage that is between the first terminal A1 and the second terminal A2 after the first direct current/direct current conversion circuit is DC2, and a value of a voltage that is between the third terminal A3 and the fourth terminal A4 after the second direct current/direct current conversion circuit is DC3,
when the controller 1801 controls statuses of the first switching element Q1, the second switching element Q2, and the fourth switching element Q4 to be a first state, and statuses of the third switching element Q3, the fifth switching element Q5, and the sixth switching element Q6 to be a second state, a value of an output voltage between the fourth terminal A4 and the fifth terminal A5 is DC1+DC2+DC3;
when the controller 1801 controls statuses of the second switching element Q2, the fourth switching element Q4, and the fifth switching element Q5 to be a first state, and statuses of the first switching element Q1, the third switching element Q3, and the sixth switching element Q6 to be a second state, a value of an output voltage between the fourth terminal A4 and the fifth terminal A5 is DC1+DC3;
when the controller 1801 controls statuses of the third switching element Q3, the fourth switching element Q4, and the fifth switching element Q5 to be a first state, and statuses of the first switching element Q1, the second switching element Q2, and the sixth switching element Q6 to be a second state, a value of an output voltage between the fourth terminal A4 and the fifth terminal A5 is DC3; or
when the controller 1801 controls statuses of the third switching element Q3, the fifth switching element Q5, and the sixth switching element Q6 to be a first state, and statuses of the first switching element Q1, the second switching element Q2, and the fourth switching element Q4 to be a second state, a value of an output voltage between the fourth terminal A4 and the fifth terminal A5 is 0; where
the first state means that a switching element is conducted in a direction from a first end of the switching element to a second end of the switching element, and is conducted in a direction from the second end of the switching element to the first end of the switching element; and the second state means that a switching element is disconnected in a direction from a first end of the switching element to a second end of the switching element, and is conducted in a direction from the second end of the switching element to the first end of the switching element.

It should be noted that, in the embodiment shown in FIG. 18, DC2 and DC3 may be adjusted by adjusting the first direct current/direct current conversion circuit and the second direct current/direct current conversion circuit, thereby enlarging a range of an output voltage of the power converter, and further making the power converter more flexible.

Optionally, the power converter 1800 shown in FIG. 18 may be a four-level inverter.

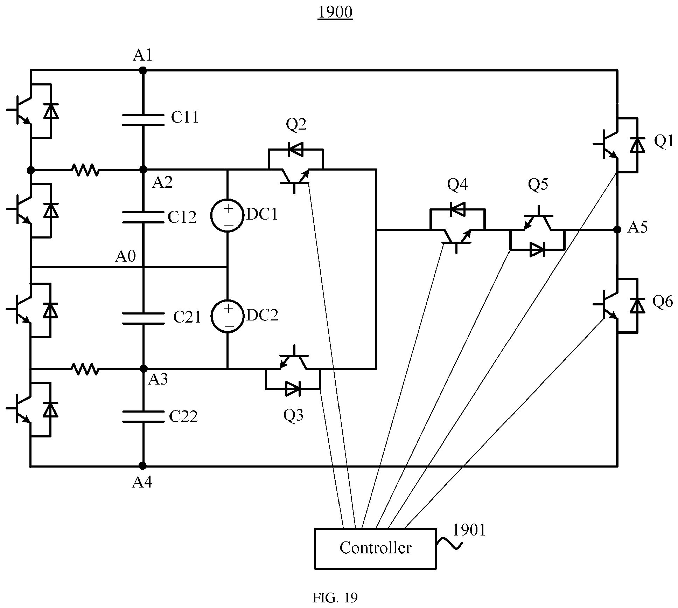

FIG. 19 is a schematic structural diagram of a power converter according to another embodiment of the present invention. The power converter 1900 shown in FIG. 19 includes the circuit of a four-level topology shown in FIG. 8, a first input voltage source DC1, a second input voltage source DC2, and a controller 1901.

The second terminal A2 is connected to a positive electrode of the first input voltage source DC1, and the second input end A0 of the first direct current/direct current conversion circuit is connected to a negative electrode of the first input voltage source DC1.

The first input end A0 of the second direct current/direct current conversion circuit is connected to a positive electrode of the second input voltage source DC2, and the third terminal A3 is connected to a negative electrode of the second input voltage source DC2.

The controller 1901 is connected to the six switching elements (Q1 to Q6), and is configured to control statuses of the six switching elements.

In addition, the controller 1901 may also be connected to a switching element in the first direct current/direct current conversion circuit, and control a status of the switching element in the first direct current/direct current conversion circuit; and the controller 1901 may also be connected to a switching element in the second direct current/direct current conversion circuit, and control a status of the switching element in the second direct current/direct current conversion circuit.

If a value of an input voltage of the first input voltage source is DC1, a value of an input voltage of the second input voltage source is DC2, a value of a voltage that is between the first terminal A1 and the second terminal A2 after the first direct current/direct current conversion circuit is DC3, and a value of a voltage that is between the third terminal A3 and the fourth terminal A4 after the second direct current/direct current conversion circuit is DC4,
when the controller 1901 controls statuses of the first switching element Q1, the second switching element Q2, and the fourth switching element Q4 to be a first state, and statuses of the third switching element Q3, the fifth switching element Q5, and the sixth switching element Q6 to be a second state, a value of an output voltage between the fourth terminal A4 and the fifth terminal A5 is DC1+DC2+DC3+DC4;
when the controller 1901 controls statuses of the second switching element Q2, the fourth switching element Q4, and the fifth switching element Q5 to be a first state, and statuses of the first switching element Q1, the third switching element Q3, and the sixth switching element Q6 to be a second state, a value of an output voltage between the fourth terminal A4 and the fifth terminal A5 is DC1+DC2+DC4;
when the controller 1901 controls statuses of the third switching element Q3, the fourth switching element Q4, and the fifth switching element Q5 to be a first state, and statuses of the first switching element Q1, the second switching element Q2, and the sixth switching element Q6 to be a second state, a value of an output voltage between the fourth terminal A4 and the fifth terminal A5 is DC4; or
when the controller 1901 controls statuses of the third switching element Q3, the fifth switching element Q5, and the sixth switching element Q6 to be a first state, and statuses of the first switching element Q1, the second switching element Q2, and the fourth switching element Q4 to be a second state, a value of an output voltage between the fourth terminal A4 and the fifth terminal A5 is 0; where
the first state means that a switching element is conducted in a direction from a first end of the switching element to a second end of the switching element, and is conducted in a direction from the second end of the switching element to the first end of the switching element; and the second state means that a switching element is disconnected in a direction from a first end of the switching element to a second end of the switching element, and is conducted in a direction from the second end of the switching element to the first end of the switching element.

It should be noted that, in the embodiment shown in FIG. 19, DC3 may be adjusted by adjusting the first direct current/direct current conversion circuit, and DC4 may be adjusted by adjusting the second direct current/direct current conversion circuit, thereby enlarging a range of an output voltage of the power converter, and further making the power converter more flexible.

Optionally, the power converter 1900 shown in FIG. 19 may be a four-level inverter.

It should be noted that, when the multi-level topology 1501 in FIG. 15 is the N-level topology shown in FIG. 10 or FIG. 12, the power converter 1500 shown in FIG. 15 may be an N-level inverter. In this case, if the N-level inverter further includes N-2 direct current/direct current conversion circuits, it may be understood that, the N-level inverter should further include an input voltage source. Specifically, for a connection manner of the input voltage sources, refer to related descriptions of the input voltage source in the four-level inverter in FIG. 18 or FIG. 19. To avoid repetition, details are not described herein again.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power converter (1800) comprising:
• a circuit of a multi-level topology comprising: five terminals (A1 - A5) and six switching elements (Q1 - Q6), wherein a first end of a first switching element (Q1) of the six switching elements (Q1 - Q6) is connected to a first terminal (A1) of the five terminals (A1 - A5), and a second end of the first switching element (Q1) is connected to a fifth terminal (A5) of the five terminals (A1-A5);
a first end of a second switching element (Q2) of the six switching elements (Q1 - Q6) is connected to a second terminal (A2) of the five terminals (A1 - A5), and a second end of the second switching element (Q2) is connected to a first end of a first branch;
a second end of a third switching element (Q3) of the six switching elements (Q1 - Q6) is connected to a third terminal (A3) of the five terminals (A1 - A5), and a first end of the third switching element (Q3) is connected to the first end of the first branch, wherein the first branch comprises a fourth switching element (Q4) and a fifth switching element (Q5) that are connected in series; and the first end of the first branch is connected to a first end of the fourth switching element (Q4) and a second end of the first branch is connected to a first end of the fifth switching element (Q5), or the first end of the first branch is connected to a second end of the fourth switching element (Q4) and a second end of the first branch is connected to a second end of the fifth switching element (Q5);
a second end of a sixth switching element (Q6) of the six switching elements (Q1 - Q6) is connected to a fourth terminal (A4) of the five terminals (A1 - A5), and a first end of the sixth switching element (Q6) is connected to the fifth terminal (A5); and
the second end of the first branch is connected to the fifth terminal (A5), wherein the second terminal (A2) and the third terminal (A3) are respectively connected to a first input end and a second input end of a first direct current/direct current conversion circuit, and the first terminal (A1) and the second terminal (A2) are respectively connected to a first output end and a second output end of the first direct current/direct current conversion circuit; and
the second terminal (A2) and the third terminal (A3) are respectively connected to a first input end and a second input end of a second direct current/direct current conversion circuit, and the third terminal (A3) and the fourth terminal (A4) are respectively connected to a first output end and a second output end of the second direct current/direct current conversion circuit; wherein
the first direct current/direct current conversion circuit and the second direct current/direct current conversion circuit share a same input port,
• an input voltage source, and
• a controller (1801),
• wherein the second terminal (A2) is connected to a positive electrode of the input voltage source, and the third terminal (A3) is connected to a negative electrode of the input voltage source; and
the controller (1801) is connected to the six switching elements (Q1 - Q6), and is configured to control statuses of the six switching elements (Q1 - Q6), wherein a value of an input voltage of the input voltage source is DC1, a value of a voltage that is between the first terminal (A1) and the second terminal (A2) after the first direct current/direct current conversion circuit is DC2, and a value of a voltage that is between the third terminal (A3) and the fourth terminal (A4) after the second direct current/direct current conversion circuit is DC3; and
when the controller (1801) controls statuses of the first switching element (Q1), the second switching element (Q2), and the fourth switching element (Q4) to be a first state, and statuses of the third switching element (Q3), the fifth switching element (Q5), and the sixth switching element (Q6) to be a second state, a value of an output voltage between the fourth terminal (A4) and the fifth terminal (A5) is DC1+DC2+DC3;
when the controller (1801) controls statuses of the second switching element (Q2), the fourth switching element (Q4), and the fifth switching element (Q5) to be a first state, and statuses of the first switching element (Q1), the third switching element (Q3), and the sixth switching element (Q6) to be a second state, a value of an output voltage between the fourth terminal (A4) and the fifth terminal (A5) is DC1+DC3;
when the controller (1801) controls statuses of the third switching element (Q3), the fourth switching element (Q4), and the fifth switching element (Q5) to be a first state, and statuses of the first switching element (Q1), the second switching element (Q2), and the sixth switching element (Q6) to be a second state, a value of an output voltage between the fourth terminal (A4) and the fifth terminal (A5) is DC3;
when the controller (1801) controls statuses of the third switching element (Q3), the fifth switching element (Q5), and the sixth switching element (Q6) to be a first state, and statuses of the first switching element (Q1), the second switching element (Q2), and the fourth switching element (Q4) to be a second state, a value of an output voltage between the fourth terminal (A4) and the fifth terminal (A5) is o; wherein
the first state means that a switching element is conducted in a direction from a first end of the switching element to a second end of the switching element, and is conducted in a direction from the second end of the switching element to the first end of the switching element; and the second state means that a switching element is disconnected in a direction from a first end of the switching element to a second end of the switching element, and is conducted in a direction from the second end of the switching element to the first end of the switching element.

## Patentansprüche

1. Leistungswandler (1800), umfassend:
• eine Schaltung mit mehrstufiger Topologie, umfassend: fünf Anschlüsse (A1 - A5) und sechs Schaltelemente (Q1 - Q6), wobei ein erstes Ende eines ersten Schaltelements (Q1) der sechs Schaltelemente (Q1 - Q6) mit einem ersten Anschluss (A1) der fünf Anschlüsse (A1 - A5) verbunden ist und ein zweites Ende des ersten Schaltelements (Q1) mit einem fünften Anschluss (A5) der fünf Anschlüsse (A1 - A5) verbunden ist;
ein erstes Ende eines zweiten Schaltelements (Q2) der sechs Schaltelemente (Q1 - Q6) mit einem zweiten Anschluss (A2) der fünf Anschlüsse (A1 - A5) verbunden ist, und ein zweites Ende des zweiten Schaltelements (Q2) mit einem ersten Ende eines ersten Zweigs verbunden ist;
ein zweites Ende eines dritten Schaltelements (Q3) der sechs Schaltelemente (Q1 - Q6) mit einem dritten Anschluss (A3) der fünf Anschlüsse (A1 - A5) verbunden ist, und ein erstes Ende des dritten Schaltelements (Q3) mit dem ersten Ende des ersten Zweigs verbunden ist, wobei der erste Zweig ein viertes Schaltelement (Q4) und ein fünftes Schaltelement (Q5) umfasst, die in Reihe geschaltet sind;
und das erste Ende des ersten Zweigs mit einem ersten Ende des vierten Schaltelements (Q4) verbunden ist und ein zweites Ende des ersten Zweigs mit einem ersten Ende des fünften Schaltelements (Q5) verbunden ist, oder das erste Ende des ersten Zweigs mit einem zweiten Ende des vierten Schaltelements (Q4) verbunden ist und ein zweites Ende des ersten Zweigs mit einem zweiten Ende des fünften Schaltelements (Q5) verbunden ist;
ein zweites Ende eines sechsten Schaltelements (Q6) der sechs Schaltelemente (Q1 - Q6) mit einem vierten Anschluss (A4) der fünf Anschlüsse (A1 - A5) verbunden ist, und ein erstes Ende des sechsten Schaltelements (Q6) mit dem fünften Anschluss (A5) verbunden ist; und
das zweite Ende des ersten Zweigs mit dem fünften Anschluss (A5) verbunden ist, wobei der zweite Anschluss (A2) und der dritte Anschluss (A3) mit einer ersten Eingangsseite bzw. einer zweiten Eingangsseite einer ersten Gleichstrom/Gleichstrom-Wandlerschaltung verbunden sind, und der erste Anschluss (A1) und der zweite Anschluss (A2) mit einer ersten Ausgangsseite bzw. einer zweiten Ausgangsseite der ersten Gleichstrom/Gleichstrom-Wandlerschaltung verbunden sind; und
der zweite Anschluss (A2) und der dritte Anschluss (A3) mit einer ersten Eingangsseite bzw. einer zweiten Eingangsseite einer zweiten Gleichstrom/Gleichstrom-Wandlerschaltung verbunden sind, und der dritte Anschluss (A3) und der vierte Anschluss (A4) mit einer ersten Ausgangsseite bzw. einer zweiten Ausgangsseite der zweiten Gleichstrom/Gleichstrom-Wandlerschaltung verbunden sind; wobei die erste Gleichstrom/Gleichstrom-Wandlerschaltung und die zweite Gleichstrom/Gleichstrom-Wandlerschaltung einen gemeinsamen Eingangsanschluss aufweisen,
• eine Eingangsspannungsquelle und
• eine Steuervorrichtung (1801),
• wobei der zweite Anschluss (A2) mit einer positiven Elektrode der Eingangsspannungsquelle verbunden ist und der dritte Anschluss (A3) mit einer negativen Elektrode der Eingangsspannungsquelle verbunden ist; und
die Steuervorrichtung (1801) mit den sechs Schaltelementen (Q1 - Q6) verbunden und dazu ausgelegt ist, die Zustände der sechs Schaltelemente (Q1 - Q6) zu steuern, wobei ein Wert einer Eingangsspannung der Eingangsspannungsquelle DC1 ist, ein Wert einer Spannung, die zwischen dem ersten Anschluss (A1) und dem zweiten Anschluss (A2) nach der ersten Gleichstrom/Gleichstrom-Wandlerschaltung liegt, DC2 ist, und ein Wert einer Spannung, die zwischen dem dritten Anschluss (A3) und dem vierten Anschluss (A4) nach der zweiten Gleichstrom/Gleichstrom-Wandlerschaltung liegt, DC3 ist; und
wenn die Steuervorrichtung (1801) die Zustände des ersten Schaltelements (Q1), des zweiten Schaltelements (Q2) und des vierten Schaltelements (Q4) so steuert, dass sie ein erster Zustand sind, und die Zustände des dritten Schaltelements (Q3), des fünften Schaltelements (Q5) und des sechsten Schaltelements (Q6) so steuert, dass sie ein zweiter Zustand sind, ein Wert einer Ausgangsspannung zwischen dem vierten Anschluss (A4) und dem fünften Anschluss (A5) DC1+DC2+DC3 ist;
wenn die Steuervorrichtung (1801) die Zustände des zweiten Schaltelements (Q2), des vierten Schaltelements (Q4) und des fünften Schaltelements (Q5) so steuert, dass sie ein erster Zustand sind, und die Zustände des ersten Schaltelements (Q1), des dritten Schaltelements (Q3) und des sechsten Schaltelements (Q6) so steuert, dass sie ein zweiter Zustand sind, ein Wert einer Ausgangsspannung zwischen dem vierten Anschluss (A4) und dem fünften Anschluss (A5) DC1+DC3 ist;
wenn die Steuervorrichtung (1801) die Zustände des dritten Schaltelements (Q3), des vierten Schaltelements (Q4) und des fünften Schaltelements (Q5) so steuert, dass sie ein erster Zustand sind, und die Zustände des ersten Schaltelements (Q1), des zweiten Schaltelements (Q2) und des sechsten Schaltelements (Q6) so steuert, dass sie ein zweiter Zustand sind, ein Wert einer Ausgangsspannung zwischen dem vierten Anschluss (A4) und dem fünften Anschluss (A5) DC3 ist;
wenn die Steuervorrichtung (1801) die Zustände des dritten Schaltelements (Q3), des fünften Schaltelements (Q5) und des sechsten Schaltelements (Q6) so steuert, dass sie ein erster Zustand sind, und die Zustände des ersten Schaltelements (Q1), des zweiten Schaltelements (Q2) und des vierten Schaltelements (Q4) so steuert, dass sie ein zweiter Zustand sind, ein Wert einer Ausgangsspannung zwischen dem vierten Anschluss (A4) und dem fünften Anschluss (A5) 0 ist; wobei
der erste Zustand bedeutet, dass ein Schaltelement in einer Richtung von einem ersten Ende des Schaltelements zu einem zweiten Ende des Schaltelements geleitet wird, und in einer Richtung von dem zweiten Ende des Schaltelements zu dem ersten Ende des Schaltelements geleitet wird; und der zweite Zustand bedeutet, dass ein Schaltelement in einer Richtung von einem ersten Ende des Schaltelements zu einem zweiten Ende des Schaltelements getrennt ist, und in einer Richtung von dem zweiten Ende des Schaltelements zu dem ersten Ende des Schaltelements geleitet wird.

## Revendications

1. Convertisseur de puissance (1800) comprenant :
• un circuit d'une topologie à plusieurs niveaux comprenant : cinq bornes (A1 - A5) et six éléments de commutation (Q1 - Q6), dans lequel une première extrémité d'un premier élément de commutation (Q1) des six éléments de commutation (Q1 - Q6) est reliée à une première borne (A1) des cinq bornes (A1 - A5), et une deuxième extrémité du premier élément de commutation (Q1) est reliée à une cinquième borne (A5) des cinq bornes (A1 - A5) ;
une première extrémité d'un deuxième élément de commutation (Q2) des six éléments de commutation (Q1 - Q6) est reliée à une deuxième borne (A2) des cinq bornes (A1 - A5), et une deuxième extrémité du deuxième élément de commutation (Q2) est reliée à une première extrémité d'une première branche ;
une deuxième extrémité d'un troisième élément de commutation (Q3) des six éléments de commutation (Q1 - Q6) est reliée à une troisième borne (A3) des cinq bornes (A1 - A5), et une première extrémité du troisième élément de commutation (Q3) est reliée à la première extrémité de la première branche, dans lequel la première branche comprend un quatrième élément de commutation (Q4) et un cinquième élément de commutation (Q5) qui sont connectés en série ; et la première extrémité de la première branche est reliée à une première extrémité du quatrième élément de commutation (Q4) et une deuxième extrémité de la première branche est reliée à une première extrémité du cinquième élément de commutation (Q5), ou la première extrémité de la première branche est reliée à une deuxième extrémité du quatrième élément de commutation (Q4) et une deuxième extrémité de la première branche est reliée à une deuxième extrémité du cinquième élément de commutation (Q5) ;
une deuxième extrémité d'un sixième élément de commutation (Q6) des six éléments de commutation (Q1 - Q6) est reliée à une quatrième borne (A4) des cinq bornes (A1 - A5), et une première extrémité du sixième élément de commutation (Q6) est reliée à la cinquième borne (A5) ; et
la deuxième extrémité de la première branche est reliée à la cinquième borne (A5), dans lequel la deuxième borne (A2) et la troisième borne (A3) sont reliées respectivement à une première extrémité d'entrée et une deuxième extrémité d'entrée d'un premier circuit de conversion courant continu/courant continu, et la première borne (A1) et la deuxième borne (A2) sont reliées respectivement à une première extrémité de sortie et une deuxième extrémité de sortie du premier circuit de conversion courant continu/courant continu ; et
la deuxième borne (A2) et la troisième borne (A3) sont reliées respectivement à une première extrémité d'entrée et une deuxième extrémité d'entrée d'un deuxième circuit de conversion courant continu/courant continu, et la troisième borne (A3) et la quatrième borne (A4) sont reliées respectivement à une première extrémité de sortie et une deuxième extrémité de sortie du deuxième circuit de conversion courant continu/courant continu ; dans lequel
le premier circuit de conversion courant continu/courant continu et le deuxième circuit de conversion courant continu/courant continu partagent un même port d'entrée,
• une source de tension d'entrée, et
• un contrôleur (1801),
• dans lequel la deuxième borne (A2) est reliée à une électrode positive de la source de tension d'entrée, et la troisième borne (A3) est reliée à une électrode négative de la source de tension d'entrée ; et
le contrôleur (1801) est relié aux six éléments de commutation (Q1 - Q6), et est configuré pour commander des états des six éléments de commutation (Q1 - Q6), dans lequel une valeur d'une tension d'entrée de la source de tension d'entrée est DC1, une valeur d'une tension qui est entre la première borne (A1) et la deuxième borne (A2) après le premier circuit de conversion courant continu/courant continu est DC2, et une valeur d'une tension qui est entre la troisième borne (A3) et la quatrième borne (A4) après le deuxième circuit de conversion courant continu/courant continu est DC3 ; et lorsque le contrôleur (1801) commande des états du premier élément de commutation (Q1), du deuxième élément de commutation (Q2) et du quatrième élément de commutation (Q4) pour être un premier état, et des états du troisième élément de commutation (Q3), du cinquième élément de commutation (Q5), et du sixième élément de commutation (Q6) pour être un deuxième état, une valeur d'une tension de sortie entre la quatrième borne (A4) et la cinquième borne (A5) est DC1 + DC2 + DC3 ; lorsque le contrôleur (1801) commande des états du deuxième élément de commutation (Q2), du quatrième élément de commutation (Q4) et du cinquième élément de commutation (Q5) pour être un premier état, et des états du premier élément de commutation (Q1), du troisième élément de commutation (Q3), et du sixième élément de commutation (Q6) pour être un deuxième état, une valeur d'une tension de sortie entre la quatrième borne (A4) et la cinquième borne (A5) est DC1 + DC3 ; lorsque le contrôleur (1801) commande des états du troisième élément de commutation (Q3), du quatrième élément de commutation (Q4) et du cinquième élément de commutation (Q5) pour être un premier état, et des états du premier élément de commutation (Q1), du deuxième élément de commutation (Q2) et du sixième élément de commutation (Q6) pour être un deuxième état, une valeur d'une tension de sortie entre la quatrième borne (A4) et la cinquième borne (A5) est DC3 ;
lorsque le contrôleur (1801) commande des états du troisième élément de commutation (Q3), du cinquième élément de commutation (Q5), et du sixième élément de commutation (Q6) pour être un premier état, et des états du premier élément de commutation (Q1), du deuxième élément de commutation (Q2), et du quatrième élément de commutation (Q4) pour être un deuxième état, une valeur d'une tension de sortie entre la quatrième borne (A4) et la cinquième borne (A5) est 0 ; dans lequel le premier état signifie que l'élément de commutation est conduit dans une direction allant d'une première extrémité de l'élément de commutation vers une deuxième extrémité de l'élément de commutation, et est conduit dans une direction allant de la deuxième extrémité de l'élément de commutation vers la première extrémité de l'élément de commutation ; et le deuxième état signifie qu'un élément de commutation est déconnecté dans une direction allant d'une première extrémité de l'élément de commutation vers une deuxième extrémité de l'élément de commutation, et est conduit dans une direction allant de la deuxième extrémité de l'élément de commutation vers la première extrémité de l'élément de commutation.
